Europäisches Patentamt

European Patent Office

Office européen des brevets

(11) Publication number: **0 038 710**
**A1**

(12) # EUROPEAN PATENT APPLICATION

(21) Application number: **81301756.3**

(22) Date of filing: **21.04.81**

(51) Int. Cl.³: **F 02 M 31/20**

(30) Priority: **23.04.80 AU 3222/80**

(43) Date of publication of application:
**28.10.81 Bulletin 81/43**

(84) Designated Contracting States:
**AT BE CH DE FR GB IT LI LU NL SE**

(71) Applicant: **Wilder, Barry William**
**6/66, Castlereagh Street**
**Penrith New South Wales 2750(AU)**

(72) Inventor: **Wilder, Barry William**
**6/66, Castlereagh Street**
**Penrith New South Wales 2750(AU)**

(74) Representative: **Westwood, Edgar Bruce et al,**
**STEVENS, HEWLETT & PERKINS 5, Quality Court**
**Chancery Lane**
**London WC2A 1HZ(GB)**

(54) Petrol cooling arrangement for engines.

(57) A fuel supply system for an internal combustion engine of a motor vehicle, the system being provided with heat exchangers (14, 18, 20) adapted to reduce the fuel temperature so that the fuel delivered to the carburettor (16) is at substantially ambient air temperature.

EP 0 038 710 A1

./...

## "PETROL COOLING ARRANGEMENT FOR ENGINES"

The present invention relates to internal combustion engines and more particularly but not exclusively to internal combustion piston engines employed in motor vehicles.

With the ever increasing price of liquid fuel, particularly petroleum fuels, the efficiency of internal combustion engines has come under considerable criticism and much examination. Efficiency, particularly of internal combustion piston engines used in motor vehicles, has particularly been examined, however, with the introduction of anti-pollution legislation by many countries, vehicle engines have been adversely affected in respect of performance and efficiency due to modifications required to meet particular pieces of legislation.

It is an object of the present invention to provide a fuel supply system for an internal combustion engine which system improves the efficiency of the engine by improving the fuel consumption thereof.

There is disclosed herein a fuel supply system for an internal combustion engine, said system including a fuel pump adapted to deliver fuel to the engine, a first conduit connecting the pump inlet to a vessel to contain a supply of fuel, a second conduit extending from the pump outlet, fuel metering means adapted to govern the flow of fuel delivered to the engine and to which said second conduit is connected, and a heat exchanger forming part of said first or second conduit adapted to cool the fuel passing therethrough so that the fuel delivered to said fuel metering means is at approximately ambient air temperature.

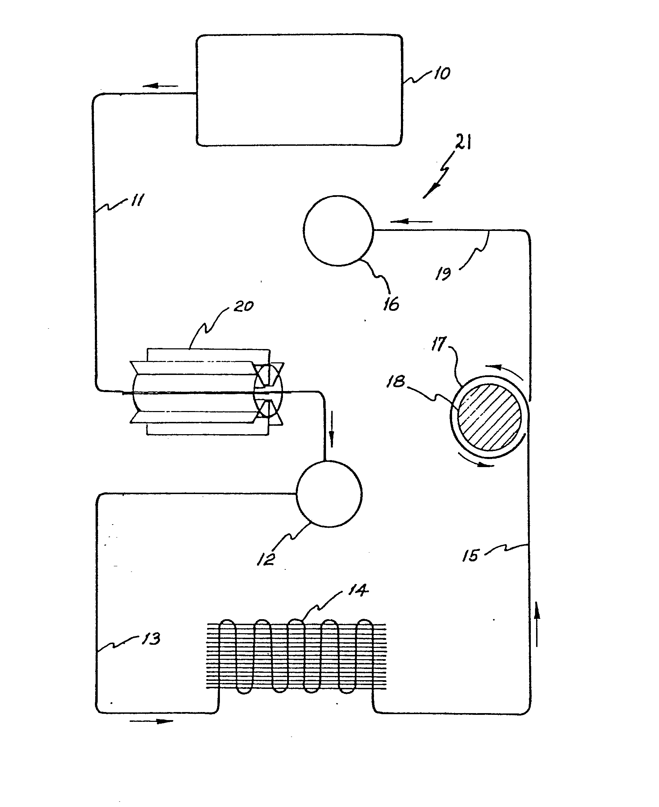

A preferred form of the present invention will now be described by way of example with reference to the accompanying drawing which schematically depicts a fuel supply system for an internal combustion piston engine preferably to be used in a motor vehicle.

In the attached drawing there is schematically depicted a fuel supply system 21 for an internal combustion piston engine (not depicted). The engine is most preferably located in a motor vehicle having a fuel tank 10 adapted to receive a supply of liquid petroleum fuel to be consumed by the engine. The system 21 further includes a metering device 16, preferably a carburettor which receives fuel from the tank 10 via a fuel pump 12.

In the attached drawing there is also schematically depicted three devices which are adapted to draw heat from the liquid fuel passing through the various lines connecting the tank 10 and carburettor 16. It is still preferable that the liquid fuel delivered to the carburettor is at substantially ambient air temperature. The three separate means depicted firstly include a heat exchanger 14 which comprises a looped conduit connected by a plurality of fins which withdraw heat from the liquid fuel passing through the conduit by means of air cooling the fins. An alternative device 20 may by employed which is generally a cylindrical casing having an internal cavity which receives the fuel on its way to the pump 12. The device 20 has a plurality of fins which contact the fuel and withdraw heat therefrom. The fins 20 dissipate the heat by convexion and/or radiation.

A still further device may include the expansion valve 18 of an airconditioning system of the vehicle. The conduit which delivers fuel to the carburettor 16 could include a looped portion 16 encompassing the expansion valve 18.

As can also be seen from the attached drawing, the device 20 could form part of the conduit 11 connecting the tank 10 to the pump 12 while the heat exchanger 14 could form part of the conduits 13 and 15 which extend to the looped part 17 which in turn communicate with the conduit 19 connected to the carburettor 16.

It should be appreciated that the various locations of each of the above discussed items which withdraw heat from the liquid fuel, may be placed at any appropriate position between the tank and carburettor 16. In some instances it may be found advantageous to have one or more of the above devices located before or after the pump 12.

The above described embodiment of the present invention has demonstrated that by delivering the fuel to the carburettor at substantially ambient air temperature has significantly improved the fuel consumption of internal combustion engines and has added to the performance of the engine.

## CLAIMS

1. A fuel supply system for an internal combustion engine, said system including a fuel pump adapted to deliver fuel to the engine, a first conduit connecting the pump inlet to a vessel to contain a supply of fuel, a second conduit extending from the pump outlet, fuel metering means adapted to govern the flow of fuel delivered to the engine and to which said second conduit is connected, and a heat exchanger forming part of said first or second conduit adapted to cool the fuel passing therethrough so that the fuel delivered to said fuel metering means is at approximately ambient air temperature.

2. An internal combustion piston engine having a fuel supply system according to claim 1.

3. A fuel supply system for an internal combustion engine substantially as hereinbefore described with reference to the accompanying drawing.

## European Patent Office

## EUROPEAN SEARCH REPORT

| DOCUMENTS CONSIDERED TO BE RELEVANT | | | CLASSIFICATION OF THE APPLICATION (Int. Cl.³) |
|---|---|---|---|
| **Category** | **Citation of document with indication, where appropriate, of relevant passages** | **Relevant to claim** | F 02 M 31/20 |
| X | DE - A - 1 576 596 (NALLINGER)<br><br>* page 4, line 15 to page 5, line 2; page 7, claim 1 * | 1,2,3 | |
| X | US - A - 3 882 692 (WATANABE)<br><br>* column 1, lines 53-58; column 2, lines 12-27; figures 1,2 * | 1,2,3 | |
| X | US - A - 3 805 757 (ANDO)<br><br>* column 8, line 27 to column 9, line 8; figure 8 * | 1,2,3 | TECHNICAL FIELDS SEARCHED (Int. Cl.³)<br><br>F 02 M |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| THE HAGUE | 23-06-1981 | TATUS |

EPO Form 1503.1  06.78